# FASCICULE DE BREVET EUROPEEN

(11) **EP 2 165 892 B1**
(45) Date de publication et mention de la délivrance du brevet: **02.11.2011**
(21) Numéro de dépôt: 09305822.0
(22) Date de dépôt: 08.09.2009
(51) Int. Cl.: B60R 22/20

(54) **Guide sangle pour ceinture de sécurité et dispositif pour fixer ce guide sangle à un pied milieu d'un véhicule automobile**
Gurtführung für Sicherheitsgurt und Vorrichtung zum Befestigen dieser Gurtführung an einem mittleren Fuß eines Kraftfahrzeugs
Belt guide for seatbelt and device for fixing this belt guide to a centre pillar of an automobile vehicle

(30) Priorité: 17.09.2008 FR 0805100
(43) Date de publication de la demande: 24.03.2010
(73) Titulaire: Renault S.A.S., 92100 Boulogne-Billancourt (FR)
(72) Inventeur: Guerlin, Philippe, 91540, MENNECY (FR); Hudry, Efflam, 75013, PARIS (FR)

(56) Documents cités:
- EP-A- 0 639 485
- EP-B1- 1 265 777
- DE-A1- 3 307 093
- DE-A1- 10 136 493

## Description

La présente invention concerne un guide sangle pour ceinture de sécurité et un dispositif pour fixer ce guide sangle à un pied milieu de la caisse d'un véhicule automobile.

Habituellement, l'enrouleur d'une ceinture de sécurité est fixé au soubassement de la caisse du véhicule automobile et le pied milieu est monté sur ce soubassement de façon que la sangle de l'enrouleur s'étende à l'intérieur du pied milieu.

Cette sangle s'appuie sur le barreau d'un guide sangle adapté pour dévier cette sangle et la guider vers un renvoi situé au-dessus de ce guide sangle.

Des guides sangles de ce type ont été décrits par exemple dans l'EP 1 265 777 et le DE 101 36 493.

Ces guides sangles sont fixés à l'intérieur de la doublure du pied milieu avant le montage de celui-ci sur le soubassement de la caisse du véhicule.

La doublure du pied milieu est après montage du pied milieu, recouverte du côté de l'habitacle par une garniture.

Le fait de devoir fixer ces guides sangles avant le montage du pied milieu et avant la fixation de la garniture complique les opérations et ralentit les cadences de fabrication.

Le but de la présente invention est de remédier à cet inconvénient.

Ce but est atteint selon l'invention, grâce à un guide sangle pour ceinture de sécurité et un dispositif pour fixer ce guide sangle à un pied milieu d'un véhicule automobile, ce guide sangle comprenant un barreau métallique comportant à chacune de ses extrémités des moyens pour le fixer transversalement par rapport à la hauteur du pied milieu, ledit dispositif étant caractérisé en ce qu'il est adapté pour permettre une fixation directe des extrémités dudit barreau sur la face du pied milieu dirigée vers l'intérieur du véhicule pourvue d'une garniture recouvrant la doublure du pied milieu, cette garniture comportant des protubérances en saillie munies d'évidements adaptés pour permettre une fixation du barreau par encliquetage dans lesdits évidements et en ce que les extrémités opposées du barreau comportent des moyens adaptés pour pouvoir être fixés sur ladite garniture par des organes de fixation traversant cette garniture et la doublure du pied milieu.

Ces dispositions permettent ainsi de résoudre d'une manière simple le problème qui est à la base de l'invention.

De préférence, lesdites protubérances et lesdits évidements sont moulés directement sur la garniture, ce qui permet d'éviter d'avoir à fixer préalablement sur la garniture des pièces spécifiques pour réaliser la fonction desdites protubérances et desdits évidements.

De préférence également, chaque protubérance comprend deux parois séparées par un évidement adapté pour recevoir le barreau, le bord de chaque paroi comportant un bec d'encliquetage.

Il suffit ainsi de pousser le barreau dans l'évidement pour que les deux parois s'écartent l'une de l'autre élastiquement et que le barreau s'engage dans l'évidement puis soit retenu dans celui-ci par les becs d'encliquetage.

Dans un mode de réalisation, la garniture comprend une échancrure débouchant à l'intérieur du pied milieu, lesdites protubérances étant situées sur la garniture de chaque côté de l'échancrure.

Dans une version particulièrement avantageuse de l'invention, les organes pour fixer les extrémités opposées du barreau du guide sangle sont des rivets pop.

Ceux-ci permettent une fixation rapide et sûre du guide sangle à partir de l'extérieur du pied milieu revêtu de sa garniture sans avoir à intervenir à l'intérieur du pied milieu.

Selon une autre particularité de l'invention, les extrémités opposées du barreau comportent chacune une partie recourbée vers le pied milieu adaptée pour être fixée sur une face latérale de la garniture s'appuyant sur une face latérale de la doublure du pied, chacune desdites parties recourbées comportant un trou pour le passage de l'un desdits organes de fixation.

Cette fixation bloque le barreau en rotation.

L'échancrure évoquée plus haut peut être réalisée sur un bord inférieur de la garniture qui est adapté pour être recouvert par une autre garniture qui est elle-même adaptée pour recouvrir ladite échancrure, les protubérances de fixation par encliquetage du barreau du guide sangle, les extrémités opposées de celui-ci et lesdits organes de fixation.

D'autres particularités et avantages de l'invention apparaîtront encore tout au long de la description ci-après.

Aux dessins annexés, donnés à titre d'exemples, non limitatifs :
- la figure 1 est une vue en perspective montrant la partie supérieure de la garniture intérieure recouvrant un pied milieu dont la partie inférieure n'est pas représentée, un guide sangle selon l'invention étant fixé sur cette garniture et ce pied milieu,
- la figure 2 est une vue en perspective du guide sangle,
- la figure 3 est une vue en coupe suivant le plan II-II de la figure 1,
- la figure 4 est une vue en coupe suivant le plan III-III de la figure 1,
- la figure 5 est une vue à échelle agrandie du détail A de la figure 4.

Les figures annexées représentent un guide sangle 1 pour ceinture de sécurité et un dispositif pour fixer ce guide sangle 1 à un pied milieu 2 d'un véhicule automobile.

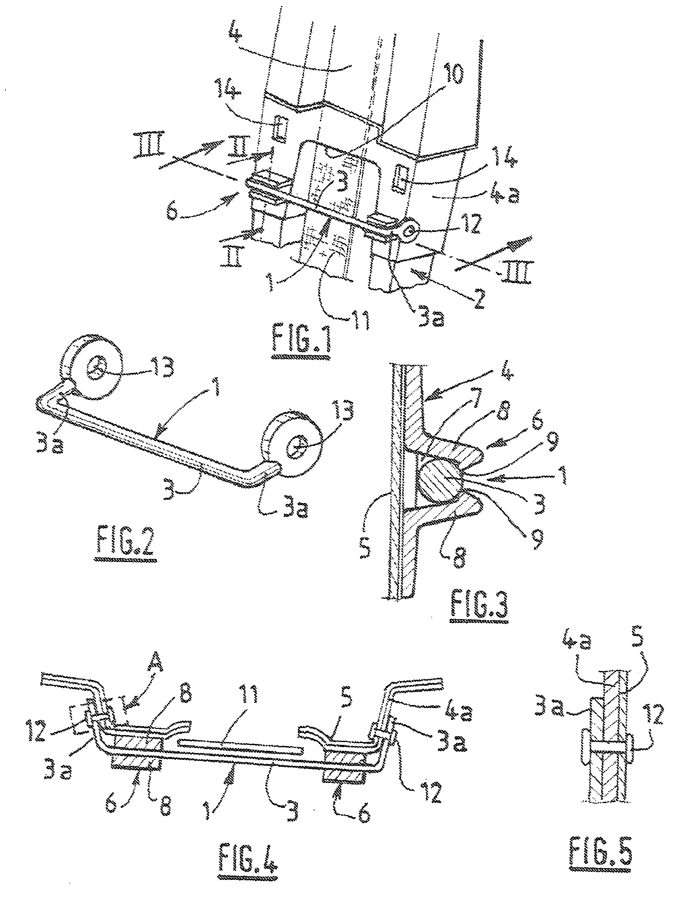

Le guide sangle 1 comprend (voir figures 1, 2, 4) un barreau métallique 3 comportant à chacune de ses extrémités des moyens pour le fixer transversalement par rapport à la hauteur du pied milieu 2.

Le dispositif de fixation de ce guide sangle 1 est adapté pour permettre une fixation directe des extrémités du barreau 3 sur la face du pied milieu 2 dirigée vers l'intérieur du véhicule qui est pourvue d'une garniture 4 recouvrant (voir figure 4) la doublure 5 du pied milieu 2.

La garniture 4 comporte des protubérances 6 en saillie munies d'évidements 7 (voir figure 3) adaptés pour permettre une fixation du barreau 3 par encliquetage dans les évidements 7.

Les extrémités opposées du barreau 3 comportent des moyens adaptés pour pouvoir être fixés sur la garniture 4 par des organes de fixation qui seront précisés plus loin, traversant cette garniture 4 et la doublure 5 du pied milieu 2.

Les protubérances 6 et les évidements 7 sont directement moulés sur la garniture 4 qui peut être en matière plastique telle que le polypropylène.

La figure 3 montre que chaque protubérance 6 comprend deux parois 8 séparées par un évidement 7 adapté pour recevoir le barreau 3.

Le bord de chaque paroi 8 comporte un bec d'encliquetage 9.

On voit en outre sur la figure 1 que la garniture 4 comprend une échancrure 10 débouchant à l'intérieur du pied milieu 2 et que les protubérances 6 sont situées sur la garniture 4 de chaque côté de l'échancrure 10.

La sangle 11 du guide sangle est visible derrière cette échancrure 10.

Les organes de fixation évoqués ci-dessus pour fixer les extrémités opposées du barreau 3 sont de préférence des rivets pop 12 visibles sur les figures 4 et 5.

Les figures 1, 2 et 4 montrent que les extrémités opposées du barreau 3 comportent chacune une partie 3a recourbée vers le pied milieu 2 adaptée pour être fixée sur une face latérale 4a de la garniture 4 s'appuyant sur une face latérale de la doublure 5 du pied.

Chacune de ces parties recourbées 3a. comporte une partie aplatie munie d'un trou 13 pour le passage d'un organe de fixation, à savoir un rivet pop 12 tel que montré sur les figures 4 et 5.

Comme montré par la figure 1, l'échancrure 10 est réalisée sur un bord inférieur de la garniture 4 qui est adapté pour être recouvert par une autre garniture (non représentée) qui est elle-même adaptée pour recouvrir l'échancrure 10, les protubérances 6 de fixation par encliquetage du barreau 3 du guide sangle 1, les extrémités opposées de celui-ci et les organes de fixation, à savoir les rivets pop 12.

Les trous 14 formés sur la garniture 4 servent à fixer par encliquetage cette autre garniture.

Comme déjà expliqué plus haut, le guide sangle 1 peut être fixé sur le pied milieu 2 déjà monté sur le soubassement de la caisse du véhicule et déjà recouvert par la garniture supérieure 4.

Pour fixer le guide sangle 1, il suffit de présenter le barreau 3 de celui-ci devant les évidements 7 des protubérances 6, de le pousser dans ces évidements 7 pour l'encliqueter dans ceux-ci, puis de fixer les parties recourbées 3a en engageant dans le trou 13 de chacune d'elles un rivet pop 12 traversant la garniture 4 et la doublure 5 du pied milieu, comme montré notamment par la figure 5.

Le fait de pouvoir fixer le guide sangle 1 sur le pied milieu 2 déjà monté et recouvert par sa garniture intérieure 4 permet de faciliter le montage du pied milieu et de réduire le temps de montage de celui-ci.

## Revendications

1. Guide sangle (1) pour ceinture de sécurité et dispositif pour fixer ce guide sangle (1) à un pied milieu (2) d'un véhicule automobile, comprenant un barreau métallique (3), ce guide sangle comportant à chacune de ses extrémités des moyens pour le fixer transversalement par rapport à la hauteur du pied milieu (2), ledit dispositif étant **caractérisé en ce qu'**il est adapté pour permettre une fixation directe des extrémités dudit barreau (3) sur la face du pied milieu (2) dirigée vers l'intérieur du véhicule pourvue d'une garniture (4) recouvrant la doublure du pied milieu (2), cette garniture (4) comportant des protubérances (6) en saillie munies d'évidements adaptés pour permettre une fixation du barreau (3) par encliquetage dans lesdits évidements et **en ce que** les extrémités opposées (3a) du barreau (3) comportent des moyens adaptés pour pouvoir être fixés sur ladite garniture (4) par des organes de fixation (12) traversant cette garniture (4) et la doublure du pied milieu (2).

2. Guide sangle et dispositif selon la revendication 1, **caractérisés en ce que** lesdites protubérances (6) et lesdits évidements (7) sont moulés sur la garniture (4).

3. Guide sangle et dispositif selon l'une des revendications 1 ou 2, **caractérisés en ce que** chaque protubérance (6) comprend deux parois (8) séparées par un évidement (7) adapté pour recevoir le barreau (3), le bord de chaque paroi (8) comportant un bec d'encliquetage (9).

4. Guide sangle et dispositif selon la revendication 3, **caractérisés en ce que** la garniture (4) comprend une échancrure (10) débouchant à l'intérieur du pied milieu (2), lesdites protubérances (6) étant situées sur la garniture de chaque côté de l'échancrure (10).

5. Guide sangle et dispositif selon l'une des revendications 1 à 4, **caractérisés en ce que** lesdits organes de fixation (12) sont des rivets pop.

6. Guide sangle et dispositif selon l'une des revendications 1 à 5, **caractérisés en ce que** les extrémités opposées du barreau comportent chacune une partie (3a) recourbée vers le pied milieu (2) adaptée pour être fixée sur une face latérale (4a) de la garniture (4) s'appuyant sur une face latérale de la doublure (5) du pied, chacune desdites parties recourbées (3a) comportant un trou (13) pour le passage de l'un desdits organes de fixation (12).

7. Guide sangle et dispositif selon l'une des revendications 4 à 6, **caractérisés en ce que** ladite échancrure (10) est réalisée sur un bord inférieur de la garniture (4) qui est adapté pour être recouvert par une autre garniture qui est elle-même adaptée pour recouvrir ladite échancrure (10), les protubérances (6) de fixation par encliquetage du barreau (3) du guide sangle (1), les extrémités opposées (3a) de celui-ci et lesdits organes de fixation (12).

## Claims

1. Belt guide (1) for seatbelt and device for fixing this belt guide (1) to a centre pillar (2) of a motor vehicle, comprising a metal bar (3), this belt guide comprising at each of its ends means for fixing it transversely relative to the height of the centre pillar (2), the said device being **characterized in that** it is suitable for allowing a direct fixing of the ends of the said bar (3) onto the face of the centre pillar (2) directed towards the inside of the vehicle provided with a coating (4) covering the lining of the centre pillar (2), this coating (4) comprising protruding protuberances (6) furnished with recesses suitable for allowing a fixing of the bar (3) by snap-fitting into said recesses and **in that** the opposite ends (3a) of the bar (3) comprise means suitable for being able to be fixed to said coating (4) by fixing components (12) passing through this coating (4) and the lining of the centre pillar (2).

2. Belt guide and device according to Claim 1, **characterized in that** the said protuberances (6) and the said recesses (7) are moulded onto the coating (4).

3. Belt guide and device according to one of Claims 1 and 2, **characterized in that** each protuberance (6) comprises two walls (8) separated by a recess (7) suitable for receiving the bar (3), the edge of each wall (8) comprising a snap-fitting nose (9).

4. Belt guide and device according to Claim 3, **characterized in that** the coating (4) comprises a cutout (10) leading to the inside of the centre pillar (2), the said protuberances (6) being situated on the coating on each side of the cutout (10).

5. Belt guide and device according to one of Claims 1 to 4, **characterized in that** the said fixing components (12) are pop rivets.

6. Belt guide and device according to one of Claims 1 to 5, **characterized in that** the opposite ends of the bar each comprise a portion (3a) curved towards the centre pillar (2) suitable for being fixed to a lateral face (4a) of the coating (4) resting on a lateral face of the lining (5) of the pillar, each of the said curved portions (3a) comprising a hole (13) for one of the said fixing components (12) to pass through.

7. Belt guide and device according to one of Claims 4 to 6, **characterized in that** the said cutout (10) is made on a bottom edge of the coating (4) which is suitable for being covered by another coating which is itself suitable for covering the said cutout (10), the protuberances (6) for fixing the bar (3) of the beltguide (1) by snap-fitting, the opposite ends (3a) of the latter and the said fixing components (12).

## Patentansprüche

1. Gurtführung (1) für einen Sicherheitsgurt und Vorrichtung zum Befestigen dieser Gurtführung (1) an einer Mittelsäule (2) eines Kraftfahrzeugs, die einen Metallstab (3) umfasst, wobei diese Gurtführung an jedem ihrer Enden Mittel zu ihrer Befestigung in Querrichtung bezüglich der Höhe der Mittelsäule (2) aufweist, wobei die Vorrichtung **dadurch gekennzeichnet ist, dass** sie dazu ausgeführt ist, eine direkte Befestigung der Enden des Stabs (3) an der Fläche der Mittelsäule (2) zu gestatten, die zu dem Fahrzeuginneren ausgerichtet ist und mit einem Mantel (4) versehen ist, der die Verkleidung der Mittelsäule (2) bedeckt, wobei dieser Mantel (4) vorstehende Vorsprünge (6) aufweist, die mit Ausnehmungen versehen sind, die dazu ausgeführt sind, eine Befestigung des Stabs (3) durch Einrasten in die Ausnehmungen zu gestatten, und dass die gegenüberliegenden Enden (3a) des Stabs (3) Mittel aufweisen, die so ausgeführt sind, dass sie durch diesen Mantel (4) und die Verkleidung der Mittelsäule (2) durchquerende Befestigungsglieder (12) an dem Mantel (4) befestigt werden können.

2. Gurtführung und Vorrichtung nach Anspruch 1, **dadurch gekennzeichnet, dass** die Vorsprünge (6) und die Ausnehmungen (7) an dem Mantel (4) angeformt sind.

3. Gurtführung und Vorrichtung nach Anspruch 1 oder 2, **dadurch gekennzeichnet, dass** jeder Vorsprung (6) zwei Wände (8) aufweist, die durch eine Ausnehmung (7) getrennt sind, die zur Aufnahme des Stabs (3) ausgeführt ist, wobei der Rand jeder Wand (8) eine Rastnase (9) aufweist.

4. Gurtführung und Vorrichtung nach Anspruch 3, **dadurch gekennzeichnet, dass** der Mantel (4) einen Ausschnitt (10) aufweist, der im Inneren der Mittelsäule (2) mündet, wobei sich die Vorsprünge (6) auf jeder Seite des Ausschnitts (10) auf dem Mantel befinden.

5. Gurtführung und Vorrichtung nach einem der Ansprüche 1 bis 4, **dadurch gekennzeichnet, dass** die Befestigungsglieder (12) Popniete sind.

6. Gurtführung und Vorrichtung nach einem der Ansprüche 1 bis 5, **dadurch gekennzeichnet, dass** die gegenüberliegenden Enden des Stabs jeweils einen zur Mittelsäule (2) gekrümmten Teil (3a) aufweisen, der zur Befestigung an einer Seitenfläche (4a) des Mantels (4) ausgeführt ist und sich auf eine Seitenfläche des Mantels (5) der Säule abstützt, wobei jeder der gekrümmten Teile (3a) ein Loch (13) für das Passieren eines der Befestigungsglieder (12) aufweist.

7. Gurtführung und Vorrichtung nach einem der Ansprüche 4 bis 6, **dadurch gekennzeichnet, dass** der Ausschnitt (10) an einem unteren Rand des Mantels (4) ausgeführt ist, der dazu ausgeführt ist, durch einen anderen Mantel bedeckt zu werden, der wiederum dazu ausgeführt ist, den Ausschnitt (10), die Vorsprünge (6) zur Rastbefestigung der Stange (3) der Gurtführung (1), die gegenüberliegenden Enden (3a) davon und die Befestigungsglieder (12) zu bedecken.
